Europäisches Patentamt

European Patent Office

Office européen des brevets

(11) Veröffentlichungsnummer: **0 261 606**
**A2**

# (12) EUROPÄISCHE PATENTANMELDUNG

(21) Anmeldenummer: 87113693.3

(51) Int. Cl.⁴: **H02H 7/24**

(22) Anmeldetag: **18.09.87**

(30) Priorität: **26.09.86 DE 3632760**

(43) Veröffentlichungstag der Anmeldung:
**30.03.88 Patentblatt 88/13**

(84) Benannte Vertragsstaaten:
**AT CH DE FR IT LI NL**

(71) Anmelder: **DEHN + SÖHNE GMBH + CO KG**
**Hans-Dehn-Strasse 1**
**D-8430 Neumarkt(DE)**

Anmelder: **BBC Brown Boveri**
**Aktiengesellschaft**
**Kallstadter Strasse 1**
**D-6800 Mannheim 31(DE)**

(72) Erfinder: **Wilbertz, Heribert, Dipl.-Ing.**
**Breslauer Strasse 17**
**D-6930 Eberbach(DE)**
Erfinder: **Runtsch, Erhard, Ing.**
**Karlsbader Strasse 17**
**D-6944 Hemsbach(DE)**
Erfinder: **Hasse, Peter, Dr.-Ing.**
**Roggenstrasse 1**
**D-8430 Neumarkt-Lähr(DE)**
Erfinder: **Aumeier, Walter, Dipl.-Ing.**
**Heideweg 108**
**D-8430 Neumarkt(DE)**

(74) Vertreter: **Fritsch, Klaus et al**
**c/o BBC Brown Boveri Aktiengesellschaft**
**Zentralbereich Patente Postfach 10 03 51**
**D-6800 Mannheim 1(DE)**

(54) **Schutzschaltungsanordnung.**

(57) Eine Schutzschaltungsanordnung in einer Installationsanlage (10) ist zum Schutz vor Überspannungen mit Überspannungsableitern (16) für jeden einzelnen Strompfad L₁, L₂, L₃, N ausgestattet und weist zusätzlich eine Abschalteinrichtung (18) auf, welche die Verbindung der Überspannungsableiter (16) mit einem gemeinsamen Bezugspotential (21) unterbricht. Dabei wird die Abschalteinrichtung (18) von einer Überwachungseinrichtung (20) angesteuert, welche in der gemeinsamen Sammelleitung (19) gegen das Bezugspotential (21) installiert ist und diese überwacht.

## Schutzschaltungsanordnung

Die Erfindung betrifft eine Schutzschaltungsanordnung gemäß dem Oberbegriff des Anspruchs 1.

Schutzschaltungsanordnungen in Installationsanlagen sollen, wie der Name bereits sagt, die Anlage selbst, Teile von ihr oder daran angeschlossene Verbraucher vor den Auswirkungen der Abweichungen von den normalen Betriebsbedingungen schützen.

Zum Schutz vor Störungen, welche aus dem Versorgungsnetz auf die Anlage einwirken, z.B. Überspannungen oder Stoßströme, sind Schaltungsanordnungen mit Überspannungsableitern vorgesehen. Handelsübliche Überspannungsableiter weisen in ihrem Aufbau häufig eine Funkenstrecke, einen spannungsabhängigen Widerstand sowie eine Schmelzsicherung als Abtrennvorrichtung auf. Letztere ist vor allen Dingen dann vorgesehen, wenn der handelsüblichen Ventilableiter nicht selbstlöschend ausgeführt ist. Die als Schmelzsicherung verwirklichte Schmelzstrecke ist dann so ausgebildet, daß sie bei nichtlöschendem oder defektem Ableiter entsprechend einer bauartbedingten Strom/Zeit-Kennlinie den jeweiligen Strompfad unterbricht. Der hierzu erforderliche Strom ist mit einigen Ampere relativ hoch und kann je nach Erdungswiderstand zu einer zu hohen Berührungsspannung führen. Daher muß der Erdungswiderstand niedrig sein, daß die zulässige Berührungsspannung (50 V) nicht überschritten wird. Niedrige Auslöseströme sind auch erforderlich, weil Erdströme von > 300 mA zu elektrisch gezündeten Bränden führen können.

Nach Ansprechen der Abtrennvorrichtung muß diese zusammen mit dem Überspannungsableiter ausgewechselt werden.

Zur Vereinfachung der Handhabung dienen Schutzschaltungsanordnungen, bei denen neben dem Überspannungsableiter als Abtrenn-bzw. Überwachungseinrichtung ein Fehlerstromschutzschalter benutzt wird. Ein derartiges Schaltungsprinzip ist in der DE-PS 30 29 453 gezeigt, die eine Geräteanordnung zum Netzanschluß mit einem Fehlerstromschulter und mit Überspannungsableitern betrifft, welche elektrisch zwischen den Netzleitern und der Erde bzw. einer Potentialausgleichsschiene liegen. Dabei liegen die Abgänge für die Überspannungsableiter von der Netzeinspeisung her gesehen hinter dem Fehlerstromschutzschlater vor den Verbrauchern. Zweck dieser Anordnung ist es, die Möglichkeit zu schaffen, nach einem Ansprechen infolge sehr hoher Stoßströme, wie sie infolge von Gewitterüberspannungen auftreten können, die Geräteanordnung wieder einschalten zu können.

Von Nachteil jedoch ist, daß beim Ansprechen des Fehlerstromschutzschalters, aufgrund eines defekten Ableiters, der gesamte nachgeschaltete Stromkreis abgeschaltet wird, was zu einer wesentlichen Beeinträchtigung der Verfügbarkeit führt.

Zur Abhilfe dieses vorgenannten Nachteils ist gemäß der DE-OS 35 22 260 vorgesehen, die Abtrenn-bzw. Überwachungseinrichtung, welche einen thermischen und/oder magnetischen Auslöser aufweist, in dem gegen Erde bzw. gegen ein Bezugspotential geschalteten Ableiterstrompfad anzuordnen. Durch diese Schaltungsanordnung wird die Abschaltung des gesamten Stromkreis vermieden. Gleichzeitig bietet die Verwendung eines Schutzorgans mit thermischen und/oder magnetischem Auslöser die Möglichkeit der jederzeitigen Wiedereinschaltung der Schutzschaltung. Von Nachteil sind jedoch der relativ hohe Auslösestrom, der aus der zur Auslösung des vorgesehenen Schutzorgans erforderlichen hohen Stromstärke resultiert, der daraus resultierende erforderliche niedrige Erdungswiderstand und die mögliche Brandgefahr.

Ein weiterer Nachteil, der bei allen bekannten Schutzschaltungsanordnungen zu verzeichnen ist, ist darin zu sehen, daß für jeden Strompfad eines Überspannungsableiters eine eigene Überwachungseinrichtung erforderlich ist.

Ausgehend von diesem Stand der Technik liegt der Erfindung die Aufgabe zugrunde, eine Schutzschaltungsanordnung der oberbegrifflichen Art zu schaffen, die mit möglichst geringem Aufwand an Material und Kosten realisierbar ist und die durch jederzeitige Wiedereinschaltbarkeit die Handhabung beim Betrieb in der Installationsanlage vereinfacht.

Diese Aufgabe wird erfindungsgemäß gelöst durch die kennzeichnenden Merkmale des Anspruchs 1.

Danach ist vorgesehen, daß zur Betätigung der Abschalteinrichtung für die in den von der Hauptleitung abgezweigten Strompfaden angeordneten einzelnen Überspannungsableiter eine Überwachungseinrichtung in der hinter der Abschalteinrichtung zusammengefaßten gegen Erde oder ein Bezugspotential geschalteten Sammelleitung installiert ist und diese überwacht.

In weiterer Ausgestaltung der Erfindung ist vorgesehen, daß die Überwachungseinrichtung der Abschalteinrichtung schaltungsmäßig nachgeordnet ist. Überwacht wird nicht wie beim Stand der Technik jeder einzelne Strompfad, sondern erfindungsgemäß ist vorgesehen, daß nur der gemeinsame Leitungsweg der Überspannungsableiter gegen Erde bzw. das Bezugspotential überwacht wird. Die Überwachungseinrichtung ist mit einem Schaltschloß ausgestattet, welches bei Auslösung jeden der einzelnen Ableiter-Strompfade synchron unterbricht. Die Überwachungseinrichtung selbst ist nach dem Prinzip einer Differenzstrommeßeinrichtung gestaltet, wobei nur der gegen Erde oder ein Bezugspotential geschaltete gemeinsame Leitungsweg einbezogen ist. Dieser Leitungsweg ist normalerweise stromlos, so daß jeder Stromfluß, der infolge eines defekten oder nichtlöschenden Ableiters auftritt und eine vorgegebene Stromstärke bzw. Zeitdauer überschreitet, die Betätigung der Abschalteinrichtung durch die Überwachungseinrichtung auslöst. Andererseits ist die erfindungsgemäße Überwachungseinrichtung soweit stoßstromfest ausgelegt, daß Stoßströme, die beim bestimmungsgemäßen Betrieb auftreten könne, nicht zur Auslösung führen.

Dadurch, daß nur ein Strompfad, nämlich die Sammelleitung, überwacht wird, kann der Ringkern sehr klein ausgeführt werden, da die Durchführungsöffnung ebenfalls nur sehr klein sein muß. Dies hat zur Konsequenz eine kurze Eisenweglänge und dadurch ein kleines Kernvolumen.

Ein weiterer Vorteil der Erfindung besteht darin, daß die erfindungsgemäße Schutzschaltungsanordnung netzunabhängig ist und so ohne Bedarf an irgenwelcher Fremdenergie, z.B. aus dem Netz, voll funktionsfähig bleibt. Zusätzliche Schutzmaßnahmen wie z.B. Fehlerstromschutzschalter können vorgesehen sein, sind aber für die Erfindung selbst nicht erforderlich.

Demgemäß kann die Erfindung in Installationsanlagen mit Fehlerstromschutzschaltern problemlos zum Einsatz kommen, wobei eine Plazierung - schaltungsmäßig hinter den Fehlerstromschutzschaltern erfordert, daß diese in stoßstromfester Ausführung vorgesehen sind.
Im übrigen kann mit der Erfindung die Fehlauslösung bei Stoßströmen bis zu einigen tausend Ampere (ca. 6 kA) sicher ausgeschlossen werden.

Ein weiterer Vorzug der Erfindung besteht darin, daß die Überwachungseinrichtung für eine beliebige Anzahl von Ableiter-Strompfaden einsetzbar ist, da die Abschalteinrichtung in ein-, zwei-, drei- oder vierpoligen Modulen aufgebaut ist, wobei jeweils zur Unterbrechung der einzelnen AbleiterStrompfade diesen ein Schalterpol der Abschalteinrichtung zugeordnet ist.

Ein besonderes Merkmal der erfindungsgemäßen Schutzschaltungsanordnung betrifft die modulare Ausgestaltung der einzelnen Komponente im gleichen Gehäusedesign, d.h., auch die Überwachungseinrichtung sowie die Überspannungsableiter sind in gleichen Design ausgeführt wie die Abschalteinrichtung. Demgemäß sind alle Module der Schutzschaltungsanordnung auf DIN-konformen Halteschienen, z.B. Hutprofilschienen, anreihbar und können daher beliebig kombiniert werden.
Die Module der Abschalteinrichtung sind hierbei in besonderer Weise so gestaltet, daß sie mittels steckbarer Kupplungen miteinander verbunden und synchron betätigt werden können.

In weiterer besonderer Ausgestaltung der Erfindung ist die Abschalteinrichtung als Kurzzeitunterbrecher gestaltet, d.h., daß sie, z.B. aufgrund des Kurzschlusses eines Ableiters nach kurzzeitiger Kontaktunterbrechung mit Lichtbogenlöschung, selbsttätig den Kontakt wieder schließt und dadurch das Ansprechen einer vorgeschalteten Überstromschutzeinrichtung verhindert.

In weiterer Verbesserung der Erfindung kann die als Kurzzeitunterbrecher gestaltete Abschaltrichtung als Modul mit einem Einzel-Überspannungsableiter kombiniert sein.

Ferner besteht die Möglichkeit, die Abschalteinrichtung mit einem ebenfalls anreihbaren Signalbaustein zu verbinden, welcher die erfolgte Abschaltung der Abschalteinrichtung optisch oder akustisch zur Anzeige bringt. Bei Bedarf kann auch die Fernübertragung des Abschaltsignals vorgesehen sein.

Wie bereits darauf hingewiesen, sind die Überspannungsableiter ebenfalls als Module ausgestaltet, wobei diese entweder auf Halteschienen anreihbar oder als einzeln steckbare Module ausgebildet sind. Die Verwendung von Einzelmodulen gestattet es, diese einzeln auszutauschen und auch einzeln auf ihre jeweilige Funktion zu überprüfen. Diese und weitere vorteilhafte Ausgestaltungen der Erfindung sind den Unteransprüchen zu entnehmen.

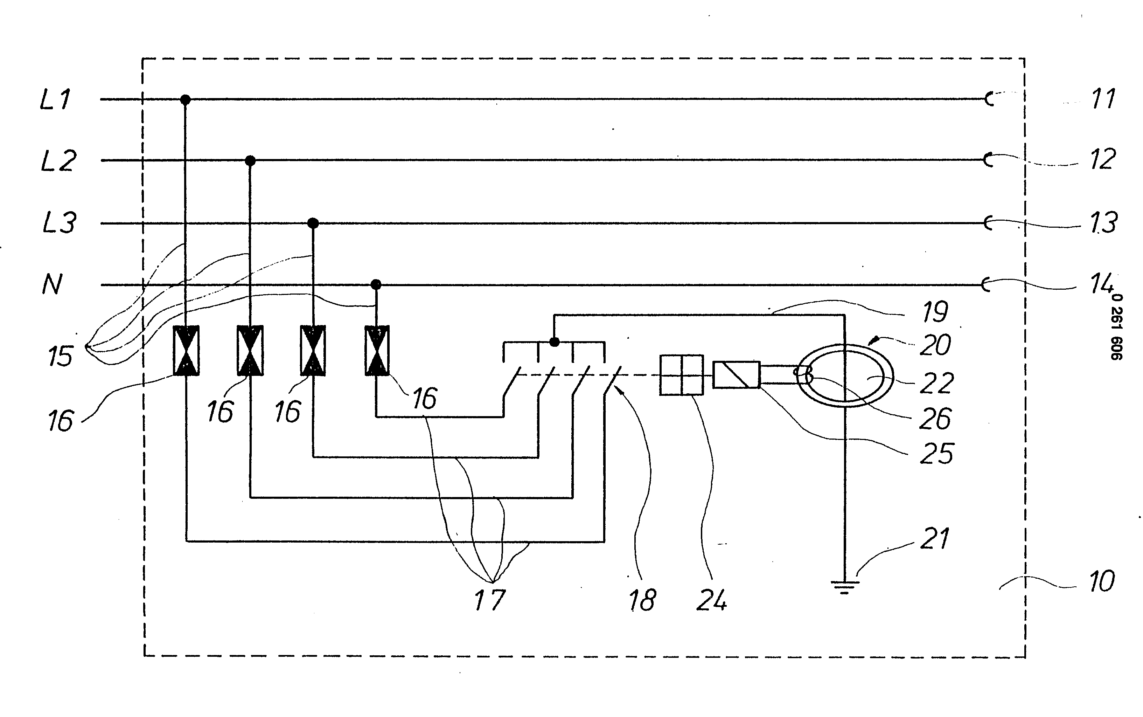

Anhand der Zeichnung, welche ein elektrisches Ersatzschaltbild der Schutzschaltungsanordnung darstellt, sollen die Erfindung vorteilhafter Ausgestaltungen und Verbesserungen der Erfindung sowie weitere Vorteile näher erläutert und beschrieben werden.

Es zeigt
die einzige Figur: Eine Schutzschaltungsanordnung in einer Installationsanlage in schematischer Darstellung.

In der einzigen Figur ist eine gestrichelt umrandete Installationsanlage 10 gezeigt, welche an ein aus drei Phasenleitern L₁, L₂, L₃ sowie einem Nulleiter N gebildetes Versorgungsnetz angeschlossen ist. In Einspeisungsrichtung vor den Anschlußstellen 11, 12, 13, 14 für nicht näher gezeigte Verbraucher gehen Leitungen 15 ab, welche zu Überspannungsableitern 16 führen. Die Überspannungsableiter 16 sind ihrerseits über Verbindungsleitungen 17 mit einer Schalteinrichtung 18 elektrisch verbunden, die von einer Überwachungseinrichtung 20 angesteuert wird. Die Schalteinrichtung 18 ist in bekannter Weise mit Schaltkontakten für jeden Schalterpol ausgestattet, wobei die beweglichen Kontaktstücke der Schaltkontakte jedes Schalterpols mechanisch miteinander verbunden sind und dadurch ihre Betätigung synchron erfolgt.

Die Verbindungsleitungen 17 von den Überspannungsableitern 16 schließen jeweils für sich an einem eigenen Schalterpol der Schalteinrichtung 18 an. Die Abgänge der so getrennt angeordneten einzelnen Schalterpole der Abschalteinrichtung 18 sind auf eine gemeinsame Sammelleitung 19 zusammengeführt, welche auf ein Bezugspotential 21, im gezeigten Beispiel Erde, geschaltet ist und von der Überwachungseinrichtung 20 überwacht wird.

Die Überwachungseinrichtung 20 weist einen Ringkern 22 mit einer Sekundärwicklung 26 auf, welcher von der Sammelleitung 19 durchquert wird und zur Erfassung und Auswertung von Stromflüssen in der gemeinsamen Sammelleitung 19 dient. Hierbei ist klar zu stellen, daß die Ableitung gegen das Bezugspotential bzw. gegen Erde im Normalfall stromfrei ist.

Beim Auftreten eines Stromes, der aus der Ableitung einer Überspannung aus einem der genannten Leiter $L_1$, $L_2$, $L_3$, N über die Überspannungsableiter 16 resultiert, wird in der Sekundärwicklung 26 ein Strom induziert, welcher auf einen mit einem Schaltschloß 24 verbundenen Auslöser 25 geschaltet ist. Das Schaltschloß 24 ist seinerseits wiederum mit der Schalteinrichtung 18 zu deren synchronen Betätigung gekoppelt und betätigt dabei die beweglichen Kontaktstücke der einzelnen Schalterpole in der Abschalteinrichtung 18.

Aufgrund der vorstehend beschriebenen mechanischen sowie elektrischen Anordnung der Einzelkomponente, wie Überspannungsableiter 16, Schalteinrichtung 18 und Überwachungseinrichtung 20 innerhalb einer Installationsanlage 10 ist die Möglichkeit gegeben, die Absicherung der Installationsanlage 10 gegen die Auswirkungen von Überspannungen, welche im Netz aufgrund von Schaltvorgängen oder witterungsbedingten Entladungsvorgängen auftreten können, mit vergleichsweise geringem Aufwand an Material und Montagearbeiten vorzunehmen. Insbesondere gestattet es die in der einzigen Figur gezeigte Schaltungsanordnung, die Überwachungseinrichtung 20 bzw. deren Stromumwandler 22 sehr klein zu dimensionieren, da aufgrund der Zusammenführung der Einzelphasen in eine Sammelleitung 19 die hierfür erforderliche Durchführungsöffnung sehr klein sein kann, was eine kurze Eisenweglänge bzw. ein kleines Kernvolumen zur Folge hat.

Die in der einzigen Figur gezeigte Schaltungsanordnung zeigt einen Schaltzustand, welche unmittelbar nach einem Störfallereignis besteht, d.h. die Schalteinrichtung 18 ist betätigt und ihre Schaltkontakte sind geöffnet. Bei Ausgestaltung der Schalteinrichtung 18 als Kurzzeitunterbrecher würde dieser Schaltzustand nur sehr kurz dauern entsprechend der Abklingzeit des Störfallereignisses. Anschließend würden die Schaltkontakte der Schalteinrichtung 18 selbsttätig wieder in "geschlossen"-Stellung gehen. Auf diese Weise kann verhindert werden, daß in der Installationsanlage 10 installierte Überstromschutzeinrichtungen bzw. Fehlerstromschutzschalter, welche in dem gezeigten Beispiel nicht dargestellt sind, nicht aktiviert werden und selbsttätig auslösen und damit ggf. sämtliche Verbraucher vom Netz trennen. Dies könnte z.B. dann der Fall sein, wenn es aufgrund eines Defektes von Überspannungsableitern 16 zu einem Kurzschluß kommt.

Die in der Figur gezeigte Schutzschaltungsanordnung ist rein schematisch dargestellt, so daß deren modulartige Gestaltung, d.h. die Ausgestaltung im gleichen Gehäusedesign, nicht zum Ausdruck kommt.

**Ansprüche**

1. Schutzschaltungsanordnung in einer Installationsanlage zum Schutz vor Überspannungen mit Überspannungsableitern und einer Abschalteinrichtung, die für jeden einzelnen der aus einer Versorgungsleitung abzweigenden Strompfade, die schaltungsmäßig hinter der Abschalteinrichtung zu einer gemeinsamen Leitung gegen ein Bezugspotential, z.B. Erde, zusammengeführt sind, vorgesehen ist, dadurch gekennzeichnet, daß zur Betätigung der Abschalteinrichtung (18) eine Überwachungseinrichtung (20) in der gemeinsamen Leitung (19) gegen das Bezugspotential (21) installiert ist und diese überwacht.

2. Schutzschaltungsanordnung nach Anspruch 1, mit einem Fehlerstromschutzschalter zum Schutz von Verbrauchern vor Fehlerströmen, und/oder mit Leitungsschutzschaltern zum Schutz vor Überströmen, dadurch gekennzeichnet, daß die Überwachungseinrichtung (20) der Abschalteinrichtung (18) schaltungsmäßig nachgeordnet ist, den gemeinsamen Leitungsweg (19) der Überspannungsableiter (16) gegen ein Bezugspotential (21) überwacht und ein mit einem Auslöser (25) verbundenes Schaltschloß (24) aufweist, welches bei Auslösung jeden der einzelnen Ableiterstrompfade (17) unterbricht.

3. Schutzschaltungsanordnung nach einem der vorherigen Ansprüche, dadurch gekennzeichnet, daß die Überwachungseinrichtung (20) nach dem Prinzip einer Differenzstrommeßeinrichtung einen vom gemeinsamen Leitungsweg (19) durchquerten Ringkern (22) mit einer Sekundärwicklung (26) und einem mit dieser verbundenen Auslöser (25) aufweist, und daß ein im gemeinsamen Leitungsweg (19) auftretender Strom in der Sekundärwicklung (26) einen Auslösestrom hervorruft, auf den der Auslöser (25) anspricht und das Schaltschloß (24) auslöst.

4. Schutzschaltungsanordnung nach einem der vorherigen Ansprüche, dadurch gekennzeichnet, daß die Überwachungseinrichtung (22) für eine beliebige Anzahl von Ableiterstrompfaden (17) einsetzbar ist.

5. Schutzschaltungsanordnung nach einem der vorherigen Ansprüche, dadurch gekennzeichnet, daß die Abschalteinrichtung (18) in ein-und mehrpoligen Modulen aufgebaut ist und, daß zur Unterbrechungen der einzelnen Ableiterstrompfade (17) diesen jeweils ein von den anderen elektrisch isolierter Schalterpol zugeordnet ist.

6. Schutzschaltungsanordnung nach einem der vorherigen Ansprüche, dadurch gekennzeichnet, daß die Module der Abschalteinrichtung (18) anreihbar und mittels steckbarer Kupplungen miteinander verbindbar sind.

7. Schutzschaltungsanordnung nach einem der vorherigen Ansprüche, dadurch gekennzeichnet, daß die Abschalteinrichtung (18) als Kurzzeitunterbrecher gestaltet ist und bei Kurzschluß von wenigstens zwei Überspannungsableitern (16) durch Kurzzeitunterbrechung mit Lichtbogenlösung das Ansprechen einer im Verbrauchernetz vorgeschalteten Überstromschutzeinrichtung verhindert.

8. Schutzschaltungsanordnung nach einem der vorherigen Ansprüche, dadurch gekennzeichnet, daß die als Kurzzeitunterbrecher gestaltete Abschalteinrichtung (18) als Modul mit Einzel-Überspannungsableitern (16) kombiniert und in einem gemeinsamen Gehäuse untergebracht ist.

9. Schutzschaltungsanordnung nach einem der vorherigen Ansprüche, dadurch gekennzeichnet, daß die Abschalteinrichtung (18) mit einem anreihbaren Signalbaustein verbunden ist, der eine erfolgte Abschaltung zur Anzeige bringt.

10. Schutzschaltungsanordnung nach einem der vorherigen Ansprüche, dadurch gekennzeichnet, daß die Überspannungsableiter (16) als anreihbare Module gestaltet sind.

11. Schutzschaltungsanordnung nach einem der vorherigen Ansprüche, dadurch gekennzeichnet, daß die Überspannungsableiter (16) als einzeln steckbare Module ausgebildet sind, welche einzeln austauschbar sind.

12. Schutzschaltungsanordnung nach einem der vorherigen Ansprüche, dadurch gekennzeichnet, daß die als einzeln steckbare Module ausgebildeten Überspannungsableiter (16) jeweils einzeln für sich auf einwandfreie Funktion überprüfbar sind.

L1 — 11

L2 — 12

L3 — 13

N — 14

0 261 606

15

16 16 16 16

19
20
22
26
25

21

17 18 24 10